# FASCICULE DE BREVET EUROPEEN

(11) **EP 4 232 332 B1**
(45) Date de publication et mention de la délivrance du brevet: **14.08.2024**
(21) Numéro de dépôt: 21783210.4
(22) Date de dépôt: 23.09.2021
(51) Int. Cl.: B60W 30/12, B60W 50/14

(54) **PROCÉDÉ DE RÉGULATION DE LA POSITION LATÉRALE D'UN VÉHICULE SUR UNE VOIE DE CIRCULATION**
VERFAHREN ZUR STEUERUNG DER SEITLICHEN POSITION EINES FAHRZEUGS AUF EINER FAHRSPUR
METHOD FOR CONTROLLING THE LATERAL POSITION OF A VEHICLE ON A TRAFFIC LANE

(30) Priorité: 22.10.2020 FR 2010820
(43) Date de publication de la demande: 30.08.2023
(73) Titulaire: Renault s.a.s, 92100 Boulogne Billancourt (FR); NISSAN MOTOR CO., LTD., Kanagawa 221-0023 (JP)
(72) Inventeur: QUILLIARD, Raphael, 91300 Massy (FR)
(74) Mandataire: Renault Group
(86) Numéro de dépôt international: PCT/EP2021/076251
(87) Numéro de publication internationale: WO 2022/083970

(56) Documents cités:
- EP-A1- 2 248 710
- EP-A1- 3 379 516
- DE-A1- 102011 076 418
- JP-A- 2012 003 421
- JP-A- 2015 027 837
- US-A1- 2010 138 115
- US-A1- 2015 348 418

## Description

### Domaine Technique de l'invention

L'invention concerne un procédé de régulation de la position latérale d'un véhicule sur une voie de circulation. L'invention porte aussi sur un véhicule automobile comprenant des moyens de mise en oeuvre d'un tel procédé de régulation.

### Etat de la technique antérieure

Les systèmes d'assistance de centrage sur la voie LCA (de l'anglais Lane Centering Assist) sont destinés à conduire et à maintenir un véhicule autonome au semi-autonome au centre de la voie sur laquelle il circule. Les documents DE102011076418 et EP2248710 décrivent de tels systèmes.

Ces systèmes coopèrent avec des moyens de détection capables d'identifier des limites latérales de la voie de circulation puis détermine un positionnement du véhicule à équidistance entre ces deux limites latérales, c'est à dire au centre de la voie de circulation. L'utilisation de tels systèmes peut paraitre non naturelle ou inappropriée dans certaines configurations de conduite, comme par exemple lorsqu'un camion est présent dans une voie adjacente, ou lorsqu'il s'agit de procéder à un décalage du véhicule dans la file pour créer un passage pour des motos ou des véhicules d'intervention. Lors de ces circonstances particulières, le conducteur peut vouloir décaler temporairement son véhicule tout en restant dans la même voie de circulation.

On connaît des systèmes d'assistance dits "souples" dans lesquels le couple exercé par le conducteur sur le volant influe toujours sur la position du véhicule dans la voie. Le conducteur peut ainsi appliquer un couple sur le volant pour décaler son véhicule vers un bord de la voie. Durant cette manoeuvre le système d'assistance s'oppose à la consigne du conducteur pour ramener le véhicule vers le centre de la voie. Une telle résistance est inconfortable, anxiogène et peut conduire à des défauts de positionnement et/ou à des distances de sécurité insuffisantes avec les véhicules environnants. De plus, le positionnement excentré du véhicule sur la voie de circulation provoque la diffusion de messages d'alerte imposés par les normes régissant les systèmes d'assistance à la conduite. De tels messages d'alerte sont également anxiogènes et inadaptés.

On connaît également par la demande WO03091813 un système de guidage pour véhicules automobiles coopérant avec un capteur apte à détecter des objets environnants dans les voies de circulation adjacentes. La position latérale du véhicule est ensuite adaptée en fonction des données de suivi de ces objets. Un tel procédé est complexe à mettre en oeuvre et n'est pas satisfaisant dans toutes les situations. Par exemple, si le trafic est chargé, le système est alors sujet à de nombreuses variations de trajectoire ce qui peut causer une situation inconfortable pour les passagers.

### Présentation de l'invention

Le but de l'invention est de fournir un procédé de régulation de la position latérale remédiant aux inconvénients ci-dessus et améliorant les procédés de régulation connus de l'art antérieur.

Plus précisément, un objet de l'invention est un procédé de régulation de la position latérale confortable, simple à mettre en oeuvre et sécurisant.

### Résumé de l'invention

L'invention se rapporte à un procédé de régulation de la position latérale d'un véhicule sur une voie de circulation, le procédé de régulation comprenant:
- une première étape de régulation automatique de la position latérale du véhicule suivant une première trajectoire de référence, et
- une première étape de contrôle de la distance latérale séparant le véhicule d'un bord de la voie de circulation, la première étape de contrôle comprenant une sous-étape d'alerte du conducteur si la distance latérale séparant le véhicule du bord de la voie de circulation est inférieure ou égale à un premier seuil, puis
- une étape de détection d'une commande appliquée sur un volant du véhicule par un conducteur pour déporter le véhicule vers un bord de la voie de circulation, puis
- un arrêt de la première étape de contrôle,
- une deuxième étape de régulation automatique de la position latérale du véhicule suivant une deuxième trajectoire de référence, la deuxième trajectoire étant déterminée en fonction de la commande appliquée sur le volant par le conducteur, et
- une deuxième étape de contrôle de la distance latérale séparant le véhicule d'un bord de la voie de circulation, la deuxième étape de contrôle comprenant une sous-étape d'alerte du conducteur si la distance latérale séparant le véhicule du bord de la voie de circulation est inférieure ou égale à un deuxième seuil, le deuxième seuil étant strictement inférieur au premier seuil.

Le procédé de régulation peut comprendre une sous-étape de calcul du premier seuil en fonction d'une largeur de la voie de circulation et en fonction d'une vitesse latérale du véhicule sur la voie de circulation, et/ou il peut comprendre une sous-étape de calcul du deuxième seuil en fonction d'une largeur de la voie de circulation et en fonction d'une vitesse latérale du véhicule sur la voie de circulation.

Le procédé de régulation peut comprendre une sous-étape d'arrêt de l'alerte donnée au conducteur si la distance latérale séparant le véhicule des bords de la voie de circulation est supérieure ou égale à un troisième seuil, le troisième seuil étant strictement supérieur au premier seuil.

La première étape de régulation et/ou la deuxième étape de régulation peut comprendre:
- une sous-étape de calcul d'un premier couple de braquage des roues directrices du véhicule,
- une sous étape de calcul d'un gain, le gain étant une fonction décroissante d'un couple appliqué sur le volant par le conducteur,
- une sous-étape de calcul d'un deuxième couple de braquage des roues directrices du véhicule par une multiplication du premier couple et du gain.

Le procédé de régulation peut comprendre une étape de vérification d'au moins un critère relatif à ladite commande, ladite étape de régulation automatique de la position du véhicule suivant la deuxième trajectoire de référence étant mise en oeuvre si et seulement si l'au moins un critère est satisfait, l'étape de vérification d'au moins un critère comprenant :
- une sous-étape de comparaison d'un écart latéral du véhicule par rapport à la première trajectoire de référence avec un seuil minimum d'écart latéral, et/ou
- une sous-étape de comparaison de l'écart latéral du véhicule par rapport à la première trajectoire de référence avec un seuil maximum d'écart latéral, et/ou
- une sous-étape de comparaison d'un couple appliqué au volant du véhicule avec un seuil minimum de couple, et/ou
- une sous-étape de comparaison du couple appliqué au volant du véhicule avec un seuil maximum de couple.

Le procédé de régulation peut comprendre une étape de détermination d'un offset latéral du véhicule par rapport à la première trajectoire de référence à la suite de la commande appliquée sur le volant par le conducteur, la deuxième trajectoire de référence étant définie en fonction de la première trajectoire de référence et de l'offset latéral, l'étape de détermination comprenant une détection d'une augmentation puis d'une stabilisation d'un couple appliqué au volant par le conducteur et/ou une détection d'une augmentation puis d'une stabilisation d'un paramètre d'état du véhicule.

La deuxième étape de régulation peut comprendre:
- une étape de calcul d'un vecteur d'état de référence du véhicule,
- une étape de calcul d'un vecteur d'état observé du véhicule,
- une étape de calcul d'une consigne d'un angle de braquage des roues directrices du véhicule en fonction de la différence entre le vecteur d'état de référence et le vecteur d'état observé,
- une étape de transition exécutée au début de la deuxième étape de régulation, l'étape de transition comprenant un remplacement d'une composante d'un vecteur d'état observé du véhicule par une composante calculée de sorte qu'une consigne d'angle de braquage des roues directrices du véhicule soit égale à une valeur courante de l'angle de braquage des roues directrices.

Le procédé de régulation peut comprendre :
- un maintien temporaire de la deuxième étape de régulation, puis automatiquement,
- une troisième étape de régulation automatique de la position du véhicule suivant la première trajectoire de référence.

L'invention se rapporte également à un produit programme d'ordinateur comprenant des instructions de code de programme enregistrées sur un support lisible par ordinateur pour mettre en oeuvre les étapes du procédé de régulation tel que défini précédemment lorsque ledit programme fonctionne sur un ordinateur.

Enfin, l'invention se rapporte aussi à un véhicule automobile comprenant des roues directrices reliées à un volant, des moyens de détection de l'environnement du véhicule, des moyens d'alerte d'un conducteur du véhicule, et au moins un calculateur configuré pour mettre en oeuvre le procédé de régulation tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un véhicule automobile selon un mode de réalisation de l'invention.
La figure 2 est une vue schématique du véhicule sur une voie de circulation.
La figure 3 est un synoptique d'un procédé de régulation de la position latérale du véhicule sur la voie de circulation selon un mode de réalisation de l'invention.
La figure 4 est une vue schématique d'un régulateur mis en oeuvre dans une étape de régulation de la position latérale du véhicule.
La figure 5 est un diagramme d'activités illustrant procédé d'alerte du conducteur en cas de dérive latérale du véhicule.
La figure 6 est un graphique illustrant le paramétrage d'un premier seuil.
La figure 7 est un graphique illustrant le paramétrage d'un deuxième seuil.

### Description détaillée

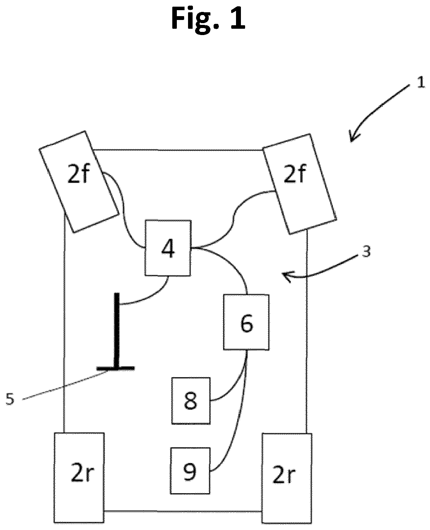

La figure 1 illustre schématiquement un véhicule 1 automobile selon un mode de réalisation de l'invention. Le véhicule 1 peut être de toute nature, notamment un véhicule particulier, un véhicule utilitaire, un camion ou un bus. Le véhicule 1 comprend deux roues avant 2f directrices et deux roues arrières 2r. L'orientation des roues directrices 2f peut être contrôlée par un système de direction 3. Le système de direction 3 comprend un dispositif de direction 4 en liaison mécanique avec les deux roues avant 2f et un volant 5 en liaison mécanique avec le dispositif de direction 4. Le système de direction 3 peut également comprendre un module de direction assistée, par exemple intégré au dispositif de direction 4. Le système de direction 3 comprend en outre une unité de commande électronique 6.

Le véhicule 1 comprend également des moyens de détection 8 de l'environnement du véhicule 1, comme par exemple des radars, et/ou des lidars et/ou des caméras. Il comprend aussi des moyens d'alerte 9 du conducteur. Ces moyens d'alerte peuvent être tout moyen visant à alerter les sens du conducteur : par exemple des moyens d'alerte visuels tels qu'un voyant lumineux ou un écran apte à afficher un symbole ou un message. Ces moyens d'alerte pourraient également être des moyens d'alerte sonores ou encore vibratoire.

L'unité de commande électronique 6 est reliée électriquement au dispositif de direction 4, aux moyens de détection 8 et aux moyens d'alerte 9. Elle peut aussi être reliée directement ou indirectement à d'autres capteurs du véhicule tels qu'un capteur d'angle au volant, un capteur de vitesse, un capteur de lacet du véhicule ou encore un capteur de couple exercé par le conducteur sur le volant 5.

L'unité de commande électronique 6 comprend notamment une mémoire, un microprocesseur et des interfaces d'entrée/sortie pour recevoir des données en provenance d'autres équipements du véhicule 1 ou pour émettre des données à l'attention d'autres équipements du véhicule 1. La mémoire de l'unité de commande électronique est un support d'enregistrement de données sur lequel est enregistré un programme d'ordinateur comprenant des instructions de code de programme de mise en oeuvre d'un procédé selon un mode de réalisation de l'invention. Le microprocesseur est apte à exécuter ce procédé. Notamment, l'unité de commande électronique 6 est apte à envoyer des ordres de commande au dispositif de direction 4 via son interface d'entrée/sortie de sorte à appliquer un couple visant à orienter les roues directrices 2f. Ainsi, le véhicule 1 est un véhicule autonome ou semi-autonome, c'est-à-dire qu'il peut se diriger et se maintenir sur une voie de direction sans intervention d'un conducteur. Le véhicule 1 peut également être contrôlé de manière conventionnelle par un conducteur, en actionnant le volant. En remarque, dans ce document le "couple" appliqué sur les roues directrices se rapporte au couple utile pour orienter les roues directrices et ainsi diriger le véhicule. Ce terme ne désigne donc pas un couple moteur utile à entraîner les roues en rotation pour faire avancer le véhicule.

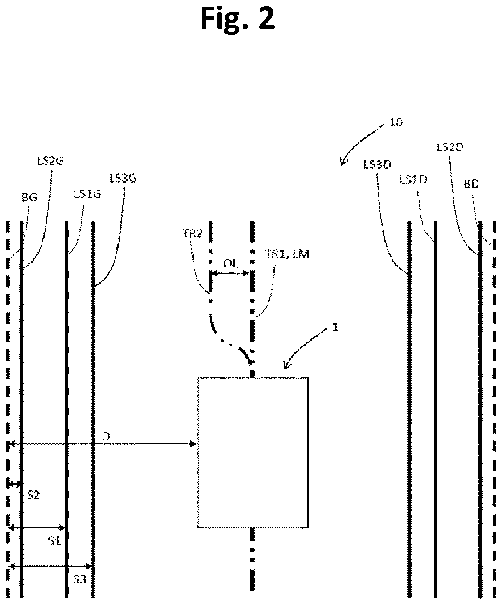

La figure 2 illustre le véhicule 1 circulant sur une voie de circulation 10. La voie de circulation est prévue pour accueillir un seul véhicule sur sa largeur. La voie de circulation 10 est délimitée à gauche et à droite par deux bords BG et BD. Ces bords peuvent être matérialisé sous la forme de lignes de démarcation comme par exemple des lignes continues ou des lignes en pointillés, de couleur blanche ou jaune. En variante les bords BG et BD pourraient simplement correspondre aux extrémités latérales de la voie de circulation et être matérialisées par un trottoir, un talus, ou simplement par les bords d'un revêtement de route. La route sur laquelle circule le véhicule 1 peut comprendre plusieurs voies de circulation positionnées à gauche et/ou à droite de la voie de circulation 10.

On a représenté également sur la figure 2 des lignes fictives LS1G, LS2G, LS3G, LS1D, LS2D, LS3D, et LM. Ces lignes ne sont pas matérialisées sur la voie de circulation mais ont été simplement représentées afin de bien comprendre l'invention. Les lignes LS1G, LS2G et LS3G sont sensiblement parallèles au bord gauche BG et sont distantes de celui-ci respectivement de seuils S1, S2 et S3. De même, les lignes LS1D, LS2D et LS3D sont sensiblement parallèles au bord droit BD et sont distantes de celui-ci respectivement des seuils S1, S2 et S3. La ligne LM s'étend à équidistance des bords BG et BD. Autrement dit, la ligne LM est une ligne médiane de la voie de circulation 10. En remarque, la voie de circulation illustrée sur la figure 2 est en ligne droite. Toutefois, l'invention pourrait aussi bien être mis en oeuvre lorsque la voie de circulation décrit une courbe ou un virage.

Les moyens de détection 8 sont aptes à identifier les bords BG et BD de la voie de circulation 10 et à déterminer une position latérale du véhicule 1 cette voie de circulation. La position latérale du véhicule peut être par exemple déterminée en quantifiant la distance latérale D (ou écart latéral D) séparant un bord gauche du véhicule du bord gauche BG de la voie de circulation.

Dans ce document on définit l'axe longitudinal comme l'axe de la voie de circulation à hauteur du véhicule 1. L'axe longitudinal peut donc être sensiblement parallèlement aux bords BG et BD. Dans l'hypothèse où les bords BG et BD ne seraient pas strictement parallèles, l'axe longitudinal peut désigner une bissectrice de ces deux lignes à hauteur du véhicule 1. L'axe longitudinal pourrait aussi correspondre à un axe parallèle seulement à l'un des deux bords BG ou BD. L'axe transversal est l'axe de la voie de circulation perpendiculaire à l'axe longitudinal. L'adjectif "latéral" caractérise un objet suivant l'axe transversal. Ainsi, la position latérale du véhicule désigne la position du véhicule suivant l'axe transversal.

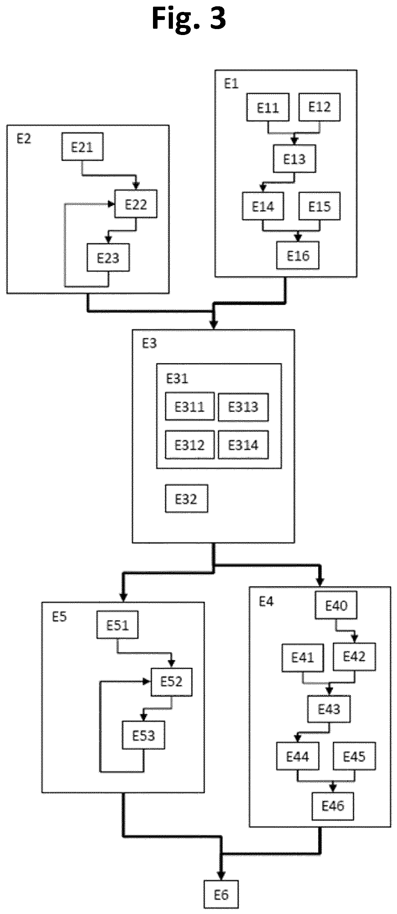

Un mode de réalisation d'un procédé de régulation de la position latérale du véhicule 1 sur la voie de circulation 10 va maintenant être décrit à l'appui de la figure 3.

Dans une première étape E1, on procède à une régulation automatique de la position du véhicule suivant une première trajectoire de référence TR1. La première trajectoire de référence peut être définie sensiblement au centre de la voie de circulation. Elle peut donc correspondre à la ligne médiane LM. Autrement dit, la position latérale du véhicule est asservie de manière à suivre la ligne médiane LM.

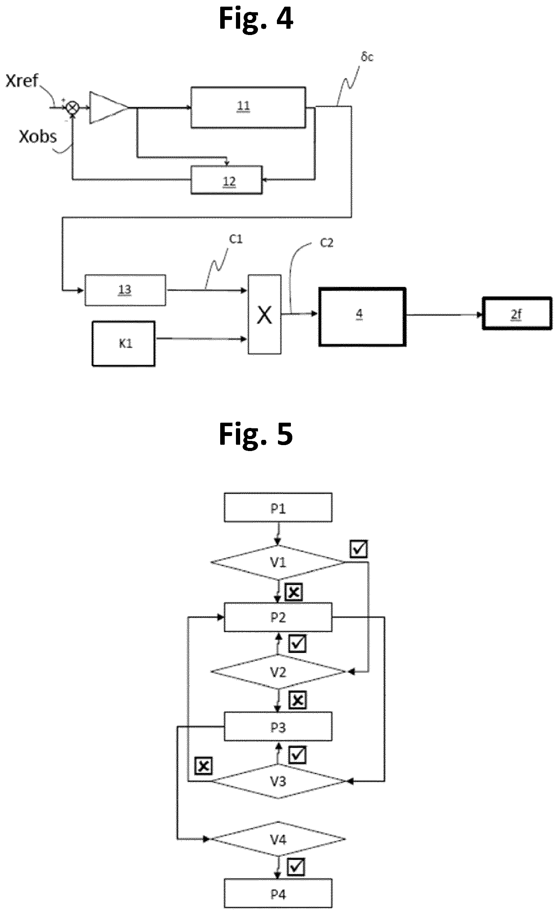

La régulation automatique de la position latérale du véhicule suivant la trajectoire de référence TR1 peut être réalisée au moyen d'un algorithme en boucle fermée tel que représenté schématiquement sur la figure 4. La première étape de régulation E1 comprend ainsi une sous-étape E11 de calcul d'un vecteur d'état de référence Xref du véhicule, une sous-étape E12 de calcul d'un vecteur d'état observé Xobs du véhicule, et une sous-étape E13 de calcul d'une consigne d'un angle de braquage δc des roues directrices du véhicule en fonction de la différence entre le vecteur d'état de référence Xref et le vecteur d'état observé Xobs. Ensuite, la consigne d'un angle de braquage δc est utilisée pour le calcul du vecteur d'état observé Xobs lors d'une itération suivante de la première étape E1.

Le vecteur d'état de référence Xref décrit la position et la trajectoire souhaités pour le véhicule. Ce vecteur d'état peut être calculé notamment en fonction de la première trajectoire de référence TR1, c'est-à-dire la ligne médiane LM. Comme le véhicule 1 subit diverses perturbations résultant de facteurs internes ou externes au véhicule 1, le vecteur d'état de référence Xref à un instant donné peut être différent du vecteur d'état observé Xobs du véhicule. Ces facteurs internes ou externes peuvent être par exemple des variations de l'adhérence du véhicule, des variations de chargement, des déformations de la chaussée, l'impact du vent, la précision des moyens de détection 8.

Le vecteur d'état observé Xobs peut être calculé à partir de capteurs embarqués dans le véhicule, notamment à partir des moyens de détection 8, et à partir d'un modèle cinématique du véhicule (identifié par 11 sur la figure 4) et d'un observateur (identifié par 12 sur la figure 4). Le vecteur d'état observé Xobs peut comprendre tout ou partie des sept composantes suivantes :
- une vitesse de lacet du véhicule, et/ou
- un angle de cap du véhicule, et/ou
- une vitesse latérale du véhicule, et/ou
- un écart latéral du véhicule par rapport à la trajectoire de référence, et/ou
- une vitesse de braquage des roues directrices du véhicule, et/ou
- un angle de braquage des roues directrices du véhicule, et/ou
- une intégrale de l'écart latéral du véhicule par rapport à la trajectoire de référence.

La première étape de régulation E1 comprend ensuite une sous-étape E14, lors de laquelle on calcule un premier couple C1. Ce premier couple C1 est calculé en fonction de la consigne d'angle de braquage δc précédemment calculée et au moyen d'un régulateur PID 13, c'est-à-dire un régulateur proportionnel, intégral, dérivé.

La première étape de régulation E1 comprend également une sous-étape E15 lors de laquelle on calcule un gain K1 compris entre 0 et 1. Avantageusement, le gain K1 peut être une fonction décroissante du couple appliqué sur le volant 5 par le conducteur. Autrement dit, plus le couple appliqué par le conducteur sur le volant 5 est important plus le gain K1 sera faible.

Enfin, la première étape de régulation E1 comprend une sous-étape E16 où on calcule un couple C2 à appliquer aux roues directrices 2f par une multiplication du couple C1 avec le gain K1. Le couple C2 ainsi obtenu peut ensuite être fourni au dispositif de direction 4 afin d'orienter les roues directrices.

Le véhicule 1 peut donc être contrôlé selon plusieurs modes de fonctionnement: dans un premier mode, dit mode manuel et correspondant à une valeur du gain K1 égale à 0, l'orientation des roues directrices 2f est contrôlée uniquement par le conducteur. Dans un deuxième mode correspondant à une valeur du gain K1 égale à 1, le couple C2 transmis aux roues directrices est suffisant pour suivre la première trajectoire de référence. Enfin, dans un troisième mode de fonctionnement, dans lequel le gain K1 est compris entre 0 et 1 exclus, le couple C2 transmis aux roues directrices est insuffisant pour suivre la première trajectoire de référence. Toutefois, le couple C2 est ressenti par le conducteur via la prise en main du volant et est interprété comme une incitation à orienter le volant pour suivre la première trajectoire de référence TR1. Le couple de braquage réellement appliqué sur les roues directrices 2f résulte alors de la somme du couple C2 et du couple transmis aux roues directrices par l'action du conducteur sur le volant. On considère que la régulation de la position latérale du véhicule est automatique dès lors que le gain K1 est strictement supérieur à 0.

Parallèlement à la première étape de régulation E1, le procédé comprend une première étape de contrôle E2 de la distance latérale séparant le véhicule des bords BG et BD de la voie de circulation.

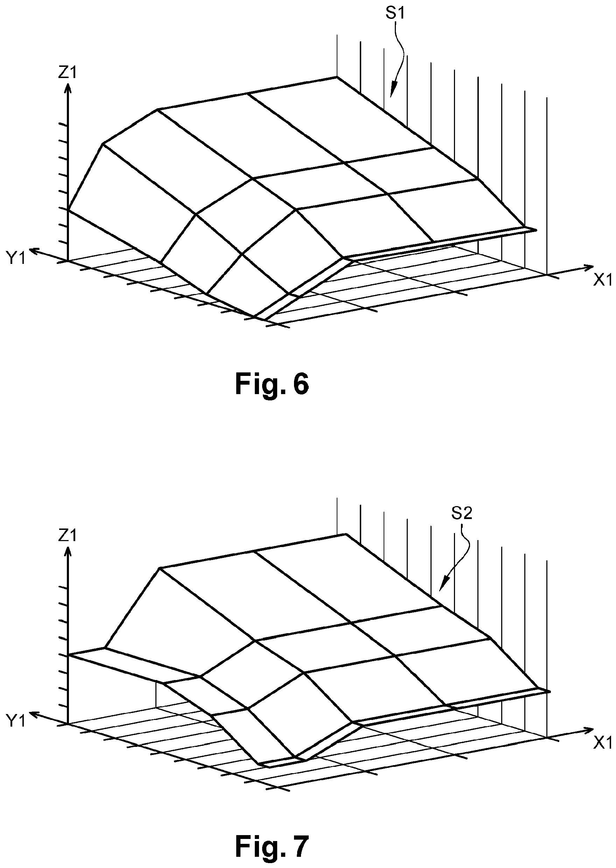

La première étape de contrôle E2 comprend tout d'abord une sous-étape E21 de calcul du premier seuil S1. Notamment, le premier seuil S1 peut être calculé en fonction d'une largeur de la voie de circulation 10 et en fonction d'une vitesse latérale du véhicule 1 sur la voie de circulation 10. Le premier seuil peut être déterminé de sorte à respecter une norme imposant une alerte du conducteur en cas de dérive du véhicule. La largeur de la voie de circulation peut être la distance séparant les bords BG et BD de la voie de circulation à hauteur du véhicule 1 ou à une distance donnée à l'avant du véhicule 1. Elle peut être calculée grâce aux moyens de détection 8. La vitesse latérale du véhicule 1 désigne la vitesse du véhicule suivant l'axe transversal Y, c'est-à-dire la vitesse à laquelle il se rapproche du bord BG ou BD. La figure 6 illustre un exemple de cartographie du premier seuil S1. L'axe X1 désigne la largeur de voie, par exemple comprise entre 2.5m et 4m. L'axe Y1 désigne la vitesse latérale du véhicule 1en valeur absolue, par exemple comprise entre 0 et 1.8 m/s. L'axe Z1 désigne le seuil S1 obtenu, celui-ci peut être par exemple compris entre 10cm et 30cm environ. Le seuil S1 peut être une fonction croissante de la vitesse latérale et une fonction croissante de la largeur de la voie. Avantageusement, le seuil S1 est identique à gauche et à droite de la voie de circulation mais en variante, il pourrait être différent.

La première étape de contrôle E2 comprend une sous-étape d'alerte E22 du conducteur si la distance latérale séparant le véhicule du bord BD ou BG de la voie de circulation devient inférieure ou égale au premier seuil S1 précédemment calculé. L'alerte du conducteur est effectuée en activant les moyens d'alerte 9. Ainsi, le conducteur est prévenu que l'action du dispositif de direction 4 sur les roues directrices 2f est insuffisante pour suivre la première trajectoire de référence TR1. Il peut donc agir sur le volant 5 pour recentrer le véhicule sur la voie de circulation. Ainsi, on satisfait une exigence règlementaire consistant à alerter le conducteur si le véhicule se rapproche trop des bords de la voie de circulation.

Dans une troisième sous étape E23, l'alerte donnée au conducteur est arrêtée si la distance latérale séparant le véhicule du bord BD ou BG de la voie de circulation devient ou redevient supérieure ou égale à un troisième seuil S3. Le troisième seuil S3 est strictement supérieur au premier seuil S1. Le troisième seuil S3, que l'on peut dénommer seuil de réarmement, peut être défini en fonction de la largeur de la voie de circulation et en fonction de sa courbure. Ainsi, on évite des activations et désactivations intempestives des moyens d'alerte 9.

Alors que la position du véhicule est régulée pour suivre la première trajectoire de référence, le conducteur peut souhaiter décaler son véhicule sur un côté de la voie de circulation pour anticiper toute forme de risque. Par exemple, s'il double un camion par la gauche, il peut souhaiter décaler son véhicule vers la gauche de la voie de circulation afin d'augmenter la distance latérale le séparant du camion. Si une moto ou un véhicule d'intervention s'apprête à le doubler par la gauche, il peut souhaiter décaler son véhicule vers la droite pour laisser un passage suffisant. Le conducteur peut également souhaiter décaler son véhicule simplement pour se décaler par rapport au véhicule le précédant sur la voie de circulation et ainsi améliorer sa vision de la route à l'avant du véhicule. Pour décaler son véhicule, le conducteur exerce donc une commande, sous la forme d'un couple appliqué au volant 5, pour diriger son véhicule dans la direction souhaitée.

Le procédé de régulation comprend alors une étape de détection E3 de la commande appliquée au volant 5 par le conducteur. On observe alors l'écart latéral du véhicule par rapport à la première trajectoire de référence ainsi que le couple appliqué sur le volant 5. Comme nous le verrons par la suite, l'écart latéral par rapport à la trajectoire de référence sert de base à la définition d'une deuxième trajectoire de référence TR2. Avant cela, l'étape de détection E3 peut comprendre une sous-étape de vérification E31 de différents critères relatifs à ladite commande appliquée par le conducteur.

L'étape de vérification E31 peut comprendre une sous-étape E311 de comparaison d'un écart latéral du véhicule avec un seuil minimum d'écart latéral. Ce seuil minimal, dont la valeur peut être par exemple fixée à 10cm permet de filtrer les déports involontaires du conducteur par rapport à la première trajectoire de référence TR1. Ainsi, tant que l'action du conducteur sur le volant conduit à un écart du véhicule de moins de 10cm par rapport à la trajectoire de référence, la première étape de régulation E1 sera poursuivie et le véhicule continuera à suivre la première trajectoire de référence TR1.

L'étape de vérification E31 peut également comprendre une sous-étape E312 de comparaison de l'écart latéral du véhicule avec un seuil maximum d'écart latéral. Ce seuil maximal peut être défini en fonction de l'accélération latérale du véhicule, en fonction de la vitesse du véhicule, en fonction de la largeur de la voie de circulation et en fonction de la largeur du véhicule. En particulier, ce seuil maximal peut être une fonction croissante de la largeur de la voie et/ou une fonction décroissante de la largeur du véhicule, de la vitesse du véhicule et de l'accélération latérale. En définissant un seuil maximal, on évite que la deuxième trajectoire de référence soit excessivement décalée par rapport au centre de la voie de circulation. Ainsi, si la commande du conducteur mène à un écart latéral trop important, cette commande ne mènera pas à la définition d'une deuxième trajectoire de référence.

L'étape de vérification E31 peut également comprendre une sous-étape E313 de comparaison du couple appliqué au volant avec un seuil minimum de couple. Ce seuil minimum de couple peut être défini en fonction de la vitesse longitudinale du véhicule et en fonction de la courbure de la voie de circulation. Il peut ainsi être compris par exemple entre 0.8Nm et 1.6 Nm. En variante, ce seuil minimum de couple pourrait être égal à une valeur fixe, par exemple définie à 1.5Nm. Il permet de filtrer les actions involontaires du conducteur sur le volant. Par exemple, si le conducteur relâche temporairement le volant d'une de ses deux mains, une faible variation du couple transmis au volant peut être détectée sans toutefois correspondre à une intention du conducteur de décaler son véhicule. Toutefois, la première étape de régulation E1 sera poursuivie et le véhicule continuera à suivre la première trajectoire de référence.

L'étape de vérification E31 peut également comprendre une sous-étape E314 de comparaison du couple appliqué au volant du véhicule avec un seuil maximum de couple. Ce seuil maximum de couple peut par exemple être défini à 4Nm. Si le conducteur exerce un tel couple sur le volant, ce qui peut être interprété comme une commande d'urgence, notamment une manoeuvre d'évitement, alors le procédé de régulation pourra être désactivé de manière à laisser le conducteur contrôler complètement la direction du véhicule.

Des délais peuvent être appliqués à chacune des sous-étapes E311, E312, E313 et E314 pour s'assurer que le critère est vérifié pendant une durée minimale. On peut par exemple utiliser un filtre basse fréquence pour filtrer les mesures d'écart latéral du véhicule et/ou les valeurs de couple appliqué au volant. On peut également utiliser un compteur et vérifier que la condition est respectée pendant un nombre d'itérations du procédé suffisamment important.

Si l'ensemble des critères vérifiés lors de l'étape de vérification E31 sont satisfaits, alors l'écart latéral séparant le véhicule 1 de la première trajectoire de référence peut être mémorisé et utilisé comme un offset latéral OL pour définir une deuxième trajectoire de référence TR2. La deuxième trajectoire de référence TR2 est donc sensiblement parallèle à la première trajectoire de référence TR1 et décalée de celle-ci de la valeur de l'offset latéral OL. Ainsi, l'étape de détection E3 peut comprendre une sous-étape de détermination E32 de l'offset latéral OL. Cette étape de détermination E32 peut comprendre la détection d'une augmentation suivi d'une stabilisation du couple appliqué au volant par le conducteur. L'offset latéral correspond alors à l'écart latéral obtenu après stabilisation du couple appliqué au volant. Le couple peut être considéré comme stabilisé à partir du moment où il devient inférieur ou égal à une valeur seuil définie par paramétrage, par exemple une valeur de l'ordre de 0.7Nm. On peut également prévoir une désactivation du procédé de régulation si le couple n'est pas stabilisé au terme d'une durée fixée par paramétrage, par exemple une durée de l'ordre de 10 secondes. En variante, l'offset latéral pourrait être aussi déterminé en observant une augmentation suivi d'une stabilisation d'un autre paramètre d'état du véhicule. Ce paramètre d'état peut être par exemple l'écart latéral par rapport à la première trajectoire de référence TR1, l'angle de cap du véhicule ou encore la vitesse latérale du véhicule.

Finalement, l'offset latéral OL est défini grâce à l'action du conducteur sur le volant. Il résulte donc d'un choix du conducteur et non d'une définition automatique. Le conducteur peut donc librement définir une valeur de décalage latérale de son véhicule en fonction de ses besoins et des conditions de circulation.

Ensuite dans une deuxième étape de régulation E4, la position du véhicule est régulée automatiquement suivant la deuxième trajectoire de référence TR2. Bien sûr cette étape est misée en oeuvre si et seulement les critères testés lors de l'étape de vérification E31 sont satisfaits.

La régulation de la position latérale du véhicule suivant la deuxième trajectoire de référence TR2 peut être réalisée de manière identique à la régulation de la position latérale du véhicule suivant la première trajectoire de référence TR1. Ainsi, la deuxième étape de régulation E4 peut comprendre des sous-étapes E41, E42, E43, E44, E45, E46 identiques aux étapes E11, E12, E13, E14, E15, E16 précédemment décrites, à la différence près que la première trajectoire de référence TR1 est remplacée par la deuxième trajectoire de référence TR2. Ainsi, le conducteur peut suivre la deuxième trajectoire de référence TR2 sans avoir à exercer un couple sur le volant pour contrecarrer un couple généré par le dispositif de direction 4 qui tendrait à ramener le véhicule vers la première trajectoire de référence TR1. Le guidage du véhicule 1 est donc plus agréable et plus précis.

Parallèlement à la deuxième étape de régulation E4, le procédé comprend une deuxième étape de contrôle E5 de la distance latérale séparant le véhicule des bords BG et BD de la voie de circulation. La deuxième étape de contrôle E5 est également réalisée de manière analogue à la première étape de contrôle E2. Elle comprend donc des sous étapes E51, E52 et E53 correspondant aux sous-étapes E21, E22 et E23 précédemment décrite. Toutefois, la deuxième étape de contrôle E5 se distingue de la première étape de contrôle E1 en ce que le premier seuil S1 est remplacé par le deuxième seuil S2, strictement inférieur au premier seuil S1. Autrement dit, lors de la deuxième étape de régulation E4, on laisse le véhicule s'approcher plus près des bords BG ou BD avant de déclencher une alerte du conducteur. On évite ainsi de déclencher des alertes du conducteur à mauvais escient puisque le décalage du véhicule est volontaire. On conserve néanmoins un moyen d'alerte si la véhicule se rapproche trop d'un bord latéral BG, BD. L'alerte donnée au conducteur durant l'étape E52 peut être identique à l'alerte donnée au conducteur durant l'étape E22. En variante, cette alerte pourrait être différente, par exemple plus intense, compte tenu de la proximité avec le bord BG ou BD de la voie de circulation.

La première étape de contrôle E2 est arrêtée dès que la deuxième étape de contrôle E5 est activée. Cette transition entre les deux étapes de contrôle peut être réalisée lorsque les critères testés lors de l'étape de vérification E31 sont satisfaits. Ainsi, en tout instant il existe au moins un seuil S1 ou S2 dont le franchissement mène à une alerte du conducteur.

La figure 7 illustre un exemple de cartographie du deuxième seuil S2. L'axe X1 désigne la largeur de voie, par exemple comprise entre 2.5m et 4m. L'axe Y1 désigne la vitesse latérale du véhicule 1 se rapprochant du bord considéré, par exemple comprise entre 0 et 1.8 m/s. L'axe Z1 désigne le seuil S2 obtenu, celui-ci peut être par exemple compris entre 0 et 20cm environ. Le seuil 2 peut être une fonction croissante de la vitesse latérale et une fonction croissante de la largeur de la voie. Avantageusement, le seuil S2 est identique à gauche et à droite de la voie de circulation mais en variante, il pourrait être différent. En remarque, le seuil S2 est indépendant de l'offset latéral OL.

En complément de l'alerte donné au conducteur en cas de franchissement des seuils S1 ou S2, on peut prévoir une étape de recentrage automatique du véhicule pour rétablir une distance latérale avec le bord BG ou BD strictement supérieure au seuil S1 ou S2, respectivement.

La figure 5 illustre un procédé d'alerte du conducteur en cas de dérive latérale du véhicule. L'état P1 correspond à un état d'activation du procédé de régulation de la position latérale du véhicule. Depuis l'état P1, on effectue un premier test V1 consistant à déterminer si le véhicule a atteint le premier seuil S1, ou autrement dit si l'un de ses bords a atteint l'une des lignes LS1G ou LS1D. Si la distance latérale séparant le véhicule d'un bord BD ou BG demeure strictement supérieure au seuil S1, le véhicule reste dans un état P2 dans lequel aucune alerte n'est faite. Par contre, si cette distance latérale devient inférieure ou égale au seuil S1, alors on effectue un deuxième test V2 consistant à déterminer si un couple est exercé sur le volant 5 du véhicule. Si un couple est exercé sur le volant 5 du véhicule, le véhicule reste dans l'état P2 dans lequel aucune alerte n'est faite. En revanche, si aucun couple n'est exercé sur le volant 5 du véhicule, le véhicule passe dans un état P3 dans lequel une alerte du conducteur est déclenchée. Depuis l'état P2, on effectue un troisième test V3 consistant à déterminer si le véhicule a atteint le deuxième seuil S2, ou autrement dit si l'un de ses bords a atteint l'une des lignes LS2G ou LS2D. Si la distance latérale séparant le véhicule d'un bord BD ou BG demeure strictement supérieure au seuil S2, le véhicule reste dans l'état P2 dans lequel aucune alerte n'est faite. Par contre, si cette distance latérale devient inférieure ou égale au seuil S2, alors le véhicule passe dans un état P3 dans lequel une alerte du conducteur est déclenchée.

Autrement dit, si le seuil S1 est atteint, le conducteur est alerté uniquement en absence de couple exercé sur le volant. Si le seuil S2 est atteint, le conducteur est alerté dans tous les cas.

Depuis l'état P3, on effectue un quatrième test V4 consistant à déterminer si le véhicule a atteint le troisième seuil S3, ou autrement dit si le véhicule est retourné dans l'espace défini entre les lignes LS3G ou LS3D. Tant que ce n'est pas le cas, l'alerte au conducteur est maintenue. Si cela est bien le cas, l'alerte au conducteur est arrêtée.

Selon un aspect original de l'invention, la deuxième étape de régulation E4 comprend une étape de transition E40 exécutée au début de la deuxième étape de régulation E4. L'étape de transition E40, vise à proposer une transition en douceur, sans overshoot, et sans à-coup entre les deux trajectoires de référence TR1, TR2. L'étape de transition E40 comprend le remplacement d'une composante du vecteur d'état observé Xobs du véhicule par une composante calculée de sorte que la consigne d'angle de braquage δc des roues directrices du véhicule soit égale à une valeur courante de l'angle de braquage δm, c'est-à-dire une valeur de l'angle de braquage des roues directrices mesurées au moment de l'exécution de l'étape de transition E40. En particulier, la composante du vecteur d'état correspondant à l'intégrale de l'écart latéral du véhicule par rapport à la trajectoire de référence peut être remplacée par une valeur calculée de sorte que la consigne d'angle de braquage δc des roues directrices du véhicule soit égale à une valeur courante de l'angle de braquage δm.

Grâce à l'invention, le conducteur peut décaler son véhicule dans la voie de circulation à la fois sans effort et sans déclanchement inopiné d'une alerte de positionnement.

Selon une autre particularité de l'invention, le procédé de régulation comprend un maintien temporaire de la deuxième étape de régulation E4, puis automatiquement, une troisième étape de régulation E6 automatique de la position du véhicule suivant la première trajectoire de référence TR1. La deuxième étape de régulation E4 peut être maintenue pendant une durée prédéfinie par calibration. Cette durée peut correspondre à la durée moyenne d'un dépassement, par exemple de l'ordre d'une dizaine de secondes au minimum. En variante, le retour à la première trajectoire de référence pourrait être déclenché automatiquement suite à la détection de la fin d'une manoeuvre de dépassement. A l'issue de cette durée prédéfinie, le véhicule peut donc automatiquement reprendre une position centrée sur la voie de circulation, suivant la première trajectoire de référence. Avantageusement, une étape de transition analogue à l'étape de transition E40 précédemment décrite peut être prévue afin d'obtenir un changement de trajectoire de référence sans à-coup.

Lors de la régulation, la position latérale du véhicule peut fluctuer autour de la trajectoire de référence suivie. Ces fluctuations, qui peuvent être de l'ordre de 10cm, peuvent être dues aux différents facteurs internes ou externes au véhicule évoqués précédemment. On peut définir une marge de sécurité paramétrée comme une fonction de la vitesse du véhicule. Avantageusement, la deuxième trajectoire de référence TR2 est définie en tenant compte de cette marge de sécurité. Ainsi, la deuxième trajectoire de référence peut être définie à une distance des lignes LS2G ou LS2D au moins supérieure ou égale à la marge de sécurité.

## Revendications

1. Procédé de régulation de la position latérale d'un véhicule (1) sur une voie de circulation (10), le procédé comprenant:
- une première étape de régulation (E1) automatique de la position latérale du véhicule suivant une première trajectoire de référence (TR1), et
- une première étape de contrôle (E2) de la distance latérale séparant le véhicule d'un bord (BD, BG) de la voie de circulation, la première étape de contrôle comprenant une sous-étape d'alerte (E22) du conducteur si la distance latérale séparant le véhicule du bord de la voie de circulation est inférieure ou égale à un premier seuil (S1), puis
- une étape de détection d'une commande (E3) appliquée sur un volant (5) du véhicule par un conducteur pour déporter le véhicule vers un bord de la voie de circulation, puis
- un arrêt de la première étape de contrôle (E2),
- une deuxième étape de régulation (E4) automatique de la position latérale du véhicule suivant une deuxième trajectoire de référence (TR2), la deuxième trajectoire étant déterminée en fonction de la commande appliquée sur le volant par le conducteur, et
- une deuxième étape de contrôle (E5) de la distance latérale séparant le véhicule d'un bord de la voie de circulation, la deuxième étape de contrôle comprenant une sous-étape d'alerte (E52) du conducteur si la distance latérale séparant le véhicule du bord de la voie de circulation est inférieure ou égale à un deuxième seuil (S2), le deuxième seuil (S2) étant strictement inférieur au premier seuil (S1).

2. Procédé de régulation selon la revendication précédente, comprenant une sous-étape (E21) de calcul du premier seuil (S1) en fonction d'une largeur de la voie de circulation et en fonction d'une vitesse latérale du véhicule sur la voie de circulation, et/ou en ce qu'il comprend une sous-étape (E51) de calcul du deuxième seuil (S2) en fonction d'une largeur de la voie de circulation et en fonction d'une vitesse latérale du véhicule sur la voie de circulation.

3. Procédé de régulation selon l'une des revendications précédentes, comprenant une sous-étape d'arrêt (E23, E53) de l'alerte donnée au conducteur si la distance latérale séparant le véhicule des bords de la voie de circulation est supérieure ou égale à un troisième seuil (S3), le troisième seuil (S3) étant strictement supérieur au premier seuil (S1).

4. Procédé de régulation selon l'une des revendications précédentes, la première étape de régulation (E1) et/ou la deuxième étape de régulation (E4) comprenant:
- une sous-étape (E14, E44) de calcul d'un premier couple (C1) de braquage des roues directrices (2f) du véhicule,
- une sous étape (E15, E45) de calcul d'un gain (K1), le gain étant une fonction décroissante d'un couple appliqué sur le volant par le conducteur,
- une sous-étape (E16, E46) de calcul d'un deuxième couple (C2) de braquage des roues directrices du véhicule par une multiplication du premier couple (C1) et du gain (K1).

5. Procédé de régulation selon l'une des revendications précédentes, comprenant une étape de vérification (E31) d'au moins un critère relatif à ladite commande, ladite étape de régulation automatique de la position du véhicule suivant la deuxième trajectoire de référence (TR2) étant mise en oeuvre si et seulement si l'au moins un critère est satisfait, l'étape de vérification d'au moins un critère comprenant :
- une sous-étape (E311) de comparaison d'un écart latéral du véhicule par rapport à la première trajectoire de référence (TR1) avec un seuil minimum d'écart latéral, et/ou
- une sous-étape (E312) de comparaison de l'écart latéral du véhicule par rapport à la première trajectoire de référence (TR1) avec un seuil maximum d'écart latéral, et/ou
- une sous-étape (E313) de comparaison d'un couple appliqué au volant du véhicule avec un seuil minimum de couple, et/ou
- une sous-étape (E314) de comparaison du couple appliqué au volant du véhicule avec un seuil maximum de couple.

6. Procédé de régulation selon l'une des revendications précédentes, comprenant une étape de détermination (E32) d'un offset latéral (OL) du véhicule par rapport à la première trajectoire de référence (TR1) à la suite de la commande appliquée sur le volant par le conducteur, la deuxième trajectoire de référence (TR2) étant définie en fonction de la première trajectoire de référence (TR1) et de l'offset latéral (OL), l'étape de détermination comprenant une détection d'une augmentation puis d'une stabilisation d'un couple appliqué au volant par le conducteur et/ou une détection d'une augmentation puis d'une stabilisation d'un paramètre d'état du véhicule.

7. Procédé de régulation selon l'une des revendications précédentes, la deuxième étape de régulation (E4) comprenant:
- une étape de calcul (E41) d'un vecteur d'état de référence (Xref) du véhicule (1),
- une étape de calcul (E42) d'un vecteur d'état observé (Xobs) du véhicule (1),
- une étape de calcul (E43) d'une consigne d'un angle de braquage (δc) des roues directrices (2f) du véhicule (1) en fonction de la différence (Xerr) entre le vecteur d'état de référence (Xref) et le vecteur d'état observé (Xobs),
- une étape de transition (E40) exécutée au début de la deuxième étape de régulation (E4), l'étape de transition comprenant un remplacement d'une composante d'un vecteur d'état observé (Xobs) du véhicule par une composante calculée de sorte qu'une consigne d'angle de braquage (δc) des roues directrices (2f) du véhicule soit égale à une valeur courante de l'angle de braquage (δm) des roues directrices.

8. Procédé de régulation selon l'une des revendications précédentes, comprenant:
- un maintien temporaire de la deuxième étape de régulation (E4), puis automatiquement,
- une troisième étape de régulation automatique (E7) de la position du véhicule suivant la première trajectoire de référence (TR1).

9. Produit programme d'ordinateur comprenant des instructions de code de programme enregistrées sur un support lisible par ordinateur pour mettre en oeuvre les étapes du procédé de régulation selon l'une quelconque des revendications précédentes lorsque ledit programme fonctionne sur un ordinateur.

10. Véhicule (1) automobile, le véhicule comprenant des roues directrices (2f) reliées à un volant (5), des moyens de détection (8) de l'environnement du véhicule, des moyens d'alerte (9) d'un conducteur du véhicule, et au moins un calculateur (6) configuré pour mettre en oeuvre le procédé de régulation selon l'une des revendications 1 à 8.

## Patentansprüche

1. Verfahren zur Regelung der seitlichen Position eines Fahrzeugs (1) auf einer Fahrspur (10), das Verfahren umfassend
- einen ersten Schritt des automatischen Regelns (E1) der seitlichen Position des Fahrzeugs gemäß einer ersten Referenzbahn (TR1), und
- einen ersten Schritt des Steuerns (E2) des Seitenabstands, der das Fahrzeug von einem Rand (BD, BG) der Fahrspur trennt, wobei der erste Schritt des Steuerns einen Unterschritt des Warnens (E22) des Fahrers, wenn der Seitenabstand, der das Fahrzeug von dem Rand der Fahrspur trennt, kleiner als oder gleich einer ersten Schwelle (S1) ist, umfasst, dann
- einen Schritt des Detektierens einer Steuerung (E3), die von einem Fahrer auf ein Lenkrad (5) des Fahrzeugs ausgeübt wird, um das Fahrzeug in Richtung eines Rands der Fahrspur zu verlagern, dann
- ein Stoppen des ersten Schritts des Steuerns (E2),
- einen zweiten Schritt des automatischen Regelns (E4) der seitlichen Position des Fahrzeugs gemäß einer zweiten Referenzbahn (TR2), wobei die zweite Bahn in Abhängigkeit von der Steuerung bestimmt wird, die vom Fahrer auf das Lenkrad ausgeübt wird, und
- einen zweiten Schritt des Steuerns (E5) des Seitenabstands, der das Fahrzeug von einem Rand der Fahrspur trennt, wobei der zweite Schritt des Steuerns einen Unterschritt des Warnens (E52) des Fahrers, wenn der Seitenabstand, der das Fahrzeug von dem Rand der Fahrspur trennt, kleiner als oder gleich einer zweiten Schwelle (S2) ist, umfasst, wobei die zweite Schwelle (S2) streng kleiner als die erste Schwelle (S1) ist.

2. Regelungsverfahren nach dem vorhergehenden Anspruch, umfassend einen Unterschritt (E21) des Berechnens der ersten Schwelle (S1) in Abhängigkeit von einer Breite der Fahrspur und in Abhängigkeit von einer seitlichen Geschwindigkeit des Fahrzeugs auf der Fahrspur, und/oder
dadurch, dass es einen Unterschritt (E51) des Berechnens der zweiten Schwelle (S2) in Abhängigkeit von einer Breite der Fahrspur und in Abhängigkeit von einer seitlichen Geschwindigkeit des Fahrzeugs auf der Fahrspur umfasst.

3. Regelungsverfahren nach einem der vorhergehenden Ansprüche, umfassend einen Unterschritt des Stoppens (E23, E53) der Warnung, die an den Fahrer ausgegeben wird, wenn der Seitenabstand, der das Fahrzeug von den Rändern der Fahrspur trennt, größer als oder gleich einer dritten Schwelle (S3) ist, wobei die dritte Schwelle (S3) streng größer als die erste Schwelle (S1) ist.

4. Regelungsverfahren nach einem der vorhergehenden Ansprüche, wobei der erste Schritt des Regelns (E1) und/oder der zweite Schritt des Regelns (E4) Folgendes umfassen
- einen Unterschritt (E14, E44) des Berechnens eines ersten Drehmoments (C1) des Lenkeinschlags der gelenkten Räder (2f) des Fahrzeugs,
- einen Unterschritt (E15, E45) des Berechnens einer Verstärkung (K1), wobei die Verstärkung eine abnehmende Funktion eines Drehmoments ist, das vom Fahrer auf das Lenkrad ausgeübt wird,
- einen Unterschritt (E16, E46) des Berechnens eines zweiten Drehmoments (C2) des Lenkeinschlags der gelenkten Räder des Fahrzeugs durch eine Multiplikation des ersten Drehmoments (C1) und der Verstärkung (K1).

5. Regelungsverfahren nach einem der vorhergehenden Ansprüche, umfassend einen Schritt des Überprüfens (E31) wenigstens eines Kriteriums in Bezug auf die Steuerung, wobei der Schritt des automatischen Regelns der Position des Fahrzeugs gemäß der zweiten Referenzbahn (TR2) nur dann durchgeführt wird, wenn das wenigstens eine Kriterium erfüllt ist, wobei der Schritt des Überprüfens wenigstens eines Kriteriums Folgendes umfasst:
- einen Unterschritt (E311) des Vergleichens eines Seitenabstands des Fahrzeugs im Verhältnis zur ersten Referenzbahn (TR1) mit einer Seitenabstand-Mindestschwelle, und/oder
- einen Unterschritt (E312) des Vergleichens des Seitenabstands des Fahrzeugs im Verhältnis zur ersten Referenzbahn (TR1) mit einer Seitenabstand-Höchstschwelle, und/oder
- einen Unterschritt (E313) des Vergleichens eines Drehmoments, das auf das Lenkrad des Fahrzeugs ausgeübt wird, mit einer Drehmoment-Mindestschwelle, und/oder
- einen Unterschritt (E314) des Vergleichens des Drehmoments, das auf das Lenkrad des Fahrzeugs ausgeübt wird, mit einer Drehmoment-Höchstschwelle.

6. Regelungsverfahren nach einem der vorhergehenden Ansprüche, umfassend einen Schritt des Bestimmens (E32) eines seitlichen Offsets (OL) des Fahrzeugs im Verhältnis zur ersten Referenzbahn (TR1) nach der Steuerung, die vom Fahrer auf das Lenkrad ausgeübt wird, wobei die zweite Referenzbahn (TR2) in Abhängigkeit von der ersten Referenzbahn (TR1) und dem seitlichen Offset (OL) definiert wird, wobei der Schritt des Bestimmens ein Detektieren einer Erhöhung, dann einer Stabilisierung eines Drehmoments, das vom Fahrer auf das Lenkrad ausgeübt wird, und/oder ein Detektieren einer Erhöhung, dann einer Stabilisierung eines Zustandsparameters des Fahrzeugs umfasst.

7. Regelungsverfahren nach einem der vorhergehenden Ansprüche,
wobei der zweite Schritt des Regelns (E4) Folgendes umfasst
- einen Schritt des Berechnens (E41) eines Referenzzustandsvektors (Xref) des Fahrzeugs (1),
- einen Schritt des Berechnens (E42) eines Vektors des beobachteten Zustands (Xobs) des Fahrzeugs (1),
- einen Schritt des Berechnens (E43) einer Vorgabe für einen Lenkwinkel (5c) der gelenkten Räder (2f) des Fahrzeugs (1) in Abhängigkeit von der Differenz (Xerr) zwischen dem Referenzzustandsvektor (Xref) und dem Vektor des beobachteten Zustands (Xobs),
- einen Schritt des Übergangs (E40), der zu Beginn des zweiten Schritts des Regelns (E4) ausgeführt wird, wobei der Schritt des Übergangs ein Ersetzen einer Komponente eines Vektors des beobachteten Zustands (Xobs) des Fahrzeugs durch eine Komponente umfasst, die so berechnet wird, dass eine Vorgabe für einen Lenkwinkel (5c) der gelenkten Räder (2f) des Fahrzeugs gleich einem aktuellen Wert des Lenkwinkels (δm) der gelenkten Räder ist.

8. Regelungsverfahren nach einem der vorhergehenden Ansprüche, umfassend
- ein temporäres Beibehalten des zweiten Schritts des Regelns (E4), dann automatisch,
- einen dritten Schritt des automatischen Regelns (E7) der Position des Fahrzeugs gemäß der ersten Referenzbahn (TR1) .

9. Computerprogrammprodukt umfassend Programmcode-Anweisungen, die auf einem computerlesbaren Datenträger gespeichert sind, zur Implementierung der Schritte des Regelungsverfahrens nach einem der vorhergehenden Ansprüche, wenn das Programm auf einem Computer läuft.

10. Kraftfahrzeug (1), wobei das Fahrzeug gelenkte Räder (2f), die mit einem Lenkrad (5) verbunden sind, Mittel zur Erkennung (8) der Umgebung des Fahrzeugs, Mittel zur Warnung (9) eines Fahrers des Fahrzeugs und wenigstens einen Rechner (6), der dazu ausgebildet ist, das Regelungsverfahren nach einem der Ansprüche 1 bis 8 durchzuführen, umfasst.

## Claims

1. Method for controlling the lateral position of a vehicle (1) on a traffic lane (10), the method comprising:
- a first step (E1) of automatically controlling the lateral position of the vehicle following a first reference trajectory (TR1), and
- a first step (E2) of monitoring the lateral distance separating the vehicle from an edge (BD, BG) of the traffic lane, the first monitoring step comprising a substep (E22) of alerting the driver if the lateral distance separating the vehicle from the edge of the traffic lane is less than or equal to a first threshold (S1), then
- a step (E3) of detecting a command applied to a steering wheel (5) of the vehicle by a driver for shifting the vehicle toward an edge of the traffic lane, then
- stopping the first monitoring step (E2),
- a second step (E4) of automatically controlling the lateral position of the vehicle following a second reference trajectory (TR2), the second trajectory being determined according to the command applied to the steering wheel by the driver, and
- a second step (E5) of monitoring the lateral distance separating the vehicle from an edge of the traffic lane, the second monitoring step comprising a substep (E52) of alerting the driver if the lateral distance separating the vehicle from the edge of the traffic lane is less than or equal to a second threshold (S2), the second threshold (S2) being strictly less than the first threshold (S1).

2. Control method according to the preceding claim, comprising a substep (E21) of calculating the first threshold (S1) according to a width of the traffic lane and according to a lateral speed of the vehicle on the traffic lane, and/or in that it comprises a substep (E51) of calculating the second threshold (S2) according to a width of the traffic lane and according to a lateral speed of the vehicle on the traffic lane.

3. Control method according to either of the preceding claims, comprising a substep (E23, E53) of stopping the alert given to the driver if the lateral distance separating the vehicle from the edges of the traffic lane is greater than or equal to a third threshold (S3), the third threshold (S3) being strictly greater than the first threshold (S1).

4. Control method according to one of the preceding claims, the first control step (E1) and/or the second control step (E4) comprising:
- a substep (E14, E44) of calculating a first steering torque (C1) of the steered wheels (2f) of the vehicle,
- a substep (E15, E45) of calculating a gain (K1), the gain being a decreasing function of a torque applied to the steering wheel by the driver,
- a substep (E16, E46) of calculating a second steering torque (C2) of the steered wheels of the vehicle by a multiplication of the first torque (C1) and of the gain (K1).

5. Control method according to one of the preceding claims, comprising a step (E31) of verifying at least one criterion relating to said command, said step of automatically controlling the position of the vehicle following the second reference trajectory (TR2) being implemented if and only if the at least one criterion is satisfied, the step of verifying at least one criterion comprising:
- a substep (E311) of comparing a lateral deviation of the vehicle with respect to the first reference trajectory (TR1) with a minimum lateral deviation threshold, and/or
- a substep (E312) of comparing the lateral deviation of a vehicle with respect to the first reference trajectory (TR1) with a maximum lateral deviation threshold, and/or
- a substep (E313) of comparing a torque applied to the steering wheel of the vehicle with a minimum torque threshold, and/or
- a substep (E314) of comparing the torque applied to the steering wheel of the vehicle with a maximum torque threshold.

6. Control method according to one of the preceding claims, comprising a step (E32) of determining a lateral offset (OL) of the vehicle with respect to the first reference trajectory (TR1) subsequent to the command applied to the steering wheel by the driver, the second reference trajectory (TR2) being defined according to the first reference trajectory (TR1) and the lateral offset (OL), the determination step comprising a detection of an increase then of a stabilization of a torque applied to the steering wheel by the driver and/or a detection of an increase then of a stabilization of a state parameter of the vehicle.

7. Control method according to one of the preceding claims, the second control step (E4) comprising:
- a step (E41) of calculating a reference state vector (Xref) of the vehicle (1),
- a step (E42) of calculating an observed state vector (Xobs) of the vehicle (1),
- a step (E43) of calculating a setpoint of a steering angle (δc) of the steered wheels (2f) of the vehicle (1) according to the difference (Xerr) between the reference state vector (Xref) and the observed state vector (Xobs),
- a transition step (E40) executed at the start of the second control step (E4), the transition step comprising a replacement of a component of an observed state vector (Xobs) of the vehicle by a component calculated such that a steering angle setpoint (δc) of the steered wheels (2f) of the vehicle is equal to a current value of the steering angle (δm) of the steered wheels.

8. Control method according to one of the preceding claims, comprising:
- temporarily maintaining the second control step (E4), then automatically,
- a third step (E7) of automatically controlling the position of the vehicle following the first reference trajectory (TR1).

9. Computer program product comprising program code instructions recorded on a computer-readable medium for implementing the steps of the control method according to any one of the preceding claims when said program is run on a computer.

10. Motor vehicle (1), the vehicle comprising steered wheels (2f) connected to a steering wheel (5), means (8) for detecting the environment of the vehicle, means (9) for alerting a driver of the vehicle, and at least one computer (6) configured to implement the control method according to one of Claims 1 to 8.
